**Europäisches Patentamt**

**European Patent Office**

**Office européen des brevets**

(19)

(11) Veröffentlichungsnummer: **0 081 146**
**B1**

(12) **EUROPÄISCHE PATENTSCHRIFT**

(45) Veröffentlichungstag der Patentschrift:
22.07.87

(21) Anmeldenummer: **82110868.5**

(22) Anmeldetag: **24.11.82**

(51) Int. Cl.⁴: **C 08 G 59/50,** C 08 G 12/06,
C 09 D 3/58

(54) **Verwendung von Amin-Formaldehydaddukten als Härter für Epoxidharze.**

(30) Priorität: **05.12.81 DE 3148236**

(43) Veröffentlichungstag der Anmeldung:
**15.06.83 Patentblatt 83/24**

(45) Bekanntmachung des Hinweises auf die Patenterteilung:
**22.07.87 Patentblatt 87/30**

(84) Benannte Vertragsstaaten:
**BE DE FR GB IT NL**

(56) Entgegenhaltungen:
**DD-A-8 192**
**DE-A-2 249 701**
**DE-C-745 826**
**US-A-2 849 486**

**SOVIET INVENTIONS ILLUSTRATED, Sektion Ch,**
**Woche K 04, 9. März 1983. DERWENT**
**PUBLICATIONS LTD. London, G 03**

(73) Patentinhaber: **Merckens Lackchemie GmbH &**
**Co. KG, Postfach 1320 Friedenstrasse 40, D-5180**
**Eschweiler (DE)**

(72) Erfinder: **Brandt, Dieter, Kreuzherrenstrasse 121,**
**D-5160 Düren 17 (DE)**

(74) Vertreter: **Werner, Hans- Karsten, Dr.,**
**Deichmannhaus am Hauptbahnhof, D-5000 Köln 1**
**(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Gegenstand der vorliegenden Erfindung ist die Verwendung von Amin-Formaldehydaddukten als Härter für Epoxidharze, insbesondere für die Herstellung von Epoxidharzbeschichtungen für Beton, Stahl, dickschichtigen Bodenbeschichtungen, Rohrbeschichtungen laminierter Beschichtungen für chemikalienbelastete Objekte, Klebstoffe, Vergußmassen und Isolierungen von Elektroteilen.

Epoxidharze sind Kunstharze, die nach dem Polyadditionsprinzip vernetzt werden und deren Reaktionsträger Epoxidgruppen sind. Genau genommen handelt es sich bei den technisch und wirtschaftlich wichtigen Typen trotz ihrer flüssigen bis harzartigen festen Konsistenz nicht um Polymere, sondern um Vorstufen, die erst durch Härtungsmittel oder Katalysatoren in den hochmolekularen duroplastischen Zustand übergeführt werden müssen.

Epoxidharze mit einem Molekulargewicht bis etwa 2000 werden beispielsweise mit Aminen, Anhydriden oder katalytisch wirksamen Zusätzen vernetzt. Diesen Epoxidharzen werden häufig Reaktivverdünner zugesetzt. Wesentliches Merkmal dieser Epoxidharze ist die Verarbeitungsviskosität.

Gleichberechtigte Partner für Epoxidharze sind die Härtungsmittel. Bedingt durch die hohe Ringspannung im Oxiranring und seine leichte Polarisierbarkeit findet die chemische Umsetzung mit vielen Verbindungen statt. Die Reaktion läuft entweder als Polyaddition über aktiven beweglichen Wasserstoff oder als Polymerisation unter Einwirkung starksaurer oder basischer Katalysatoren. Aus technischen Gründen bevorzugt man die Polyaddition, weil der Härtungsablauf besser zu steuern ist. Alle technisch bedeutsamen, für die Polyaddition tauglichen Härtungsmittel sind durch an Sauerstoff, Stickstoff oder Schwefel gebundenen beweglichen Wasserstoff gekennzeichnet. Je nachdem, ob die Reaktion bereits in der Kälte oder erst bei erhöhter Temperatur stattfindet, spricht man von Kalthärtung oder Heisshärtung.

Zu dem Problem der verlangsamten Aushärtung in dünner Schicht kommt bei Aminhärtung noch weiter erschwerend hinzu, daß die Aushärtung durch Luftkohlensäure und Luftfeuchtigkeit je nach Charakter des benutzten Härters ganz oder teilweise inhibiert wird. Deshalb stößt man in der Anwendungstechnik immer wieder auf erhebliche Schwierigkeiten, die sich nicht durch genügend hohe Beschleunigung der Systeme einfach verhindern lassen. Eine gewisse Verbesserung ist bereits beobachtet worden, wenn man die Amine mit etwa 1/10 der zur vollständigen Härtung notwendigen Menge an Epoxid dem Härter zusetzt. Bei dieser Adduktbildung ist als besonderer Nachteil die stark zunehmende Viskosität der Härter anzusehen. Diese Addukte sind obendrein stets reaktiver als die ihnen zugrundeliegenden Polyamine.

Eine weitere Beschleunigung mit Phenol, Kresol, Säuren oder Phosphorsäureestern führt insbesondere bei Aushärtung im Bereich von 0 bis 5° C zu guten Erfolgen. Darüberhinaus lassen sich mit organischen Säuren als Beschleuniger noch die aromatischen Amine bzw. deren Addukte mit in den Kreis der Kalthärter einbeziehen.

Weiterhin hat sich als besonders vorteilhaft erwiesen, Phenol über Formaldehyd an ein Polyamin zu binden, da dann die Beschleunigung gleichmässiger und intensiver wird. Zusätzlich fällt die den zugesetzten Phenolen eigene Verfärbungsneigung der Härter nicht mehr so ins Gewicht. Umsetzungsprodukte dieser Art - sog. "Mannichbasen" werden als Epoxidharzhärter angeboten. Sie zeigen gutes Härtungsverhalten bei niedrigen Außentemperaturen und dünnen Schichten.

Ein Nachteil dieser "Mannichbasen" ist, daß stets Reste an nicht umgesetzten Phenolen austreten und dabei Korrosionen und physiologische Nebenwirkungen hervorrufen.

Bei den Härtern für Epoxide auf Basis von Aminen muß auch bei Adduktbildung stets beachtet werden, daß wanderungsfähiger Wasserstoff an einem Stickstoffatom vorhanden sein muß. Aminhärter sind somit durch die Anzahl der beweglichen Wasserstoffatome im Molekül gekennzeichnet. Dies ist insbesondere auch bei der Härtung mit Polyaminen und höhermolekularen Aminen zu beachten. Bei höhermolekularen Aminen ist obendrein sterische Hinderung zu vermeiden. Eine umfassende Darstellung dieser Zusammenhänge findet man in H. Kittel "Lehrbuch der Lacke und Beschichtungen", Band I, Teil 2, Verlag W. A. Colomb, 1973, S. 613 - 686. Hier finden sich auch die verschiedenen Gruppen der Epoxidharze und der Härter auf Basis von Aminen.

Aus der US-A-2 511 913 sind Härter für Epoxidharze bekannt, die durch Umsetzung von aromatischen Aminen, wie Anilin, mit Formaldehyd entstehen. Es handelt sich hierbei um Produkte, die im aromatischen Kern methyliert sind und strukturelle Ähnlichkeit mit den Phenolformaldehydharzen haben. Aus der DE-A-2 145 833 ist bekannt, derartigen Produkten zusätzlich ein Imidazol zuzusetzen. Die Umsetzung dieser Kondensationsprodukte mit Epoxidverbindungen erfolgt nur in der Hitze, vorteilhaft in Gegenwart von Katalysatoren, wie starke Alkalien, Alkaliphenolat oder Friedel-Craftsschen Katalysatoren und deren Komplexverbindungen mit Aminen, Amiden, Sulfiden oder Diazoniumsalzen.

Aus der DE-A-22 49 701 sind aromatische Diamine bekannt, die sich bei der Umsetzung mit Formaldehyd anders verhalten als aliphatische, cycloaliphatische or araliphatische Amine. Bei der Umsetzung der aromatischen Amine mit Formaldehyd entstehen Produkte, die im aromatischen Kern methyliert sind und deshalb strukturelle Ähnlichkeit mit den Phenolformaldehyd-Harzen haben. Die Kernmethylierung findet beim nachträglichen Erhitzen auf ca. 150° C statt.

Die DE-C-745 826 beschreibt ausschließlich Umsetzungsprodukte mit einem Überschuß von Aldehyd. Es entstehen deshalb auch stets feste Harze, die keinesfalls als Härter für Epoxidharze eingesetzt werden könnten.

Die DD-A-8 192 beschreibt ebenfalls feste Harze, die keinesfalls als Härter für Epoxidharze eingesetzt werden könnten. Die Umsetzung von Amin und Aldehyd findet stets in Gegenwart von Mineralsäuren oder starken organischen Säuren statt. Im stark sauren Bereich sind jedoch völlig andere Kondensationsprodukte erhältlich als bei der direkten Umsetzung von Amin mit Aldehyd in einem hydroxylhaltigen Lösungsmittel gemäß der vorliegenden Erfindung. Die gemäß DD-A-8 192 verwendete Mineralsäure ist nicht vollständig entfernbar.

In der US-A-2 849 486 wird eine Substanz beschrieben, die durch Umsetzung von 0,5 Mol 3,3' Diaminodipropylaminen mit 1,25 Mol Formaldehyd entsteht. Diese Substanz ist wirksam gegen Bakterien und Pilze. Das dehydratisierte Produkt enthält keine aktiven Wasserstoffatome mehr und ist deshalb als Härter für Epoxidharze ungeeignet. Ferner ist dort erwähnt, daß die bekannten Kondensationsprodukte meist gefärbt sind oder sich nach einiger Zeit verfärben.

Die Erfindung hat sich die Aufgabe gestellt, die Härter für Epoxidharze auf Basis von Aminen zu verbessern. Insbesondere hat sie sich die Aufgabe gestellt, die Empfindlichkeit der Härter gegen Luft-Kohlensäure und Luft-Feuchtigkeit zu verringern und die Topfzeit zu verlängern.

Weiterhin hat sich sie Erfindung die Aufgabe gestellt, Härter zu entwickeln, die zu Produkten mit hoher Kratzfestigkeit, hoher Elastizität, ausgezeichneter Haftung auf Alt-Anstrichen führen, dabei jedoch weniger Oberflächenstörung und Vergilbung aufweisen.

Diese Aufgabe wird überraschenderweise gelöst durch die Verwendung von Amin-Formaldehydaddukten, als Härter erhältlich durch Umsetzung von bi- und mehrfunktionellen aliphatischen, cycloaliphatischen oder araliphatischen Aminen oder Gemischen derselben mit 0,4 bis 1 Mol Formaldehyd pro primärer und/oder sekundärer Aminogruppe des Amins, gegebenenfalls in Gegenwart eines hydroxylgruppenhaltigen Lösungsmittels als Härter für Epoxidharze.

Die erfindungsgemäß verwendeten Härter können lösungsmittelfrei sein, sie können jedoch gewünschtenfalls auch übliche Lösungsmittel enthalten. Bevorzugt sind hydroxylgruppenhaltige Lösungsmittel, wie Benzylalkohol.

Zur Herstellung der erfindungsgemäß verwendbaren Härter für Epoxidharze auf Basis von Aminen durch Umsetzung der Amine mit Formaldehyd setzt man bi- und mehrfunktionelle aliphatische, cycloaliphatische oder araliphatische Amine oder Gemische derselben vorzugsweise in einem hydroxylgruppenhaltigen Lösungsmittel mit Formaldehyd vorzugsweise in polymerer Form um. Man erhitzt gewünschtenfalls unter Abspaltung von Wasser und entfernt das gebildete Wasser im Vakuum. Die erfindungsgemäß verwendbaren Härter für Epoxidharze auf der Basis von Aminen sind insbesondere zur Herstellung von Epoxidharzbeschichtungen für Beton, Stahl, dickschichtige Bodenbeschichtungen, Rohrbeschichtungen, laminierte Beschichtungen für chemikalienbelastete Objekte, Klebstoffe, Vergußmassen und Isolierungen von Elektroteilen geeignet.

Das Mengenverhältnis von 0,4 - 1 Mol Formaldehyd pro primärer und/oder sekundärer Aminogruppe des Amins bedeutet bei Diaminen, daß das Verhältnis der Anzahl der primären und/oder sekundären Aminogruppen pro Mol Amin/Mol Formaldehyd 1 - 2,5 beträgt.

Dieses Ergebnis war aufgrund des Standes der Technik in keiner Weise zu erwarten. Es war zwar bekannt, daß Aldehyde mit Aminen zu Schiffschen Basen reagieren. Die Schiffschen Basen der Amine mit höheren Aldehyden haben jedoch keinerlei verbesserte Eigenschaften als Härter für Epoxidharze. Formaldehyd, insbesondere auch in seinen polymeren Formen, läßt sich in einem hydroxylhaltigen Lösungsmittel in den angegebenen Mengenverhältnissen glatt umsetzen und ergibt dabei niedrigviskose bis hochviskose Produkte. Diese Produkte sind ausgezeichnet geeignet als Härter für Epoxidharze und führen in überraschender Weise zu Produkten mit sehr hoher Kratzfestigkeit, hoher Elastizität, ausgezeichneter Haftung auf Altanstrichen auf Polyurethanbasis und/oder Epoxidharz-Polyaminbasis. Die Produkte weisen wesentlich weniger Oberflächenstörungen, wie Klebrigkeit, Schmierfilm und Krater, auf. Die Temperaturvergilbung bei 100 - 150°C sowie die Vergilbung bei Lichteinwirkung ist deutlich geringer. Die Topfzeit wird verlängert und die Empfindlichkeit gegen Luftfeuchtigkeit und Luftkohlensäure ist praktisch beseitigt. Durch die Verwendung der erfindungsgemäß erhältlichen Härter lassen sich die üblichen Epoxidharze einwandfrei zu Beschichtungen für Beton, Stahl, dickschichtige Bodenbeschichtung, Rohrbeschichtungen, laminierten Beschichtungen für chemikalienbelastete Objekte, Klebstoffe, Vergußmassen und Isolierungen von Elektroteilen verarbeiten, und zwar sowohl lösungsmittelfrei als auch mit Hilfe von Lösungsmitteln.

Als Amine kommen prinzipiell alle bi- und mehrfunktionellen aliphatischen, cycloaliphatischen und araliphatischen Amine in Frage sowie Polyamidoamine, cyclische Imidazoline, äthoxylierte Polyamine, Polyamin-Epoxidharzaddukte sowie N-Aminoethylpiperazin. Typische Beispiele sind die Alkylenamine, Trimethylhexamethylendiamin, Bis-(3-aminopropyl)-methylamin, 1,4-Bis-(3-aminopropyl)-piperazin, N,N'-Bis-(3-aminopropyl)-ethylendiamin, 6.6-Dimethyl-4.8-dioxaundecan-1.11-diamin, 4.9-Dioxadodecan-1.12-diamin und 2.2.-Bis-(4-aminocyclohexyl)-propan. Als cycloaliphatische Amine kommen Isophorondiamin, 4,4'-Diaminodicyclohexylmethan, 4,4'-Diaminodicyclohexylpropan, 2,2-Bis-(4-aminocyclohexyl)-propan, 3.3'-Dimethyl-4.4.'-diamino-dicyclohexylmethan und 3-Amino-1-cyclohexylaminopropan in Frage. Als araliphatische Amine kommen insbesondere solche Amine in Frage, bei denen die Aminogruppen am aliphatischen Rest und nicht am aromatischen Kern sitzen, z. B. $\alpha,\alpha'$-Xylylendiamine. Weitere typische Amine, die als Härter für Epoxidharze verwendet werden können, finden sich in H. Kittel loc. cit. Diese Amine können alleine oder als Gemische eingesetzt werden.

Als hydroxylgruppenhaltige Lösungsmittel kommen insbesondere Benzylalkohol, 2-Methyl-benzylalkohol, ($\pm$)-1-Phenylethanol, 2-Phenoxiethanol, Furfurylalkohol, Pineöl und Alkohole mit 2 bis 18 Kohlenstofatomen in Frage.

Formaldehyd kann zwar prinzipiell in freier Form verwendet werden. Wesentlich einfacher ist jedoch die Handhabung in Form der polymeren Formen mit bis zu 100 Formaldehydgruppen pro Molekül. Insbesondere Paraformaldehyd läßt sich besonders einfach einsetzen. Prinzipiell kann man aber auch eine wäßrige Formaldehydlösung verwenden, sofern man anschließend das Wasser im Vakuum verdampft.

Zur Herstellung der erfindungsgemäß verwendbaren Härter werden die Amine vorzugsweise mit dem hydroxylgruppenhaltigen Lösungsmittel gemischt. Feste Amine werden warm in dem Lösungsmittel gelöst und dann wieder auf Raumtemperatur abgekühlt. Zu dieser Lösung gibt man jetzt den Formaldehyd langsam hinzu. Bei Verwendung von Polyoxymethylen (Paraformaldehyd) hat es sich als zweckmäßig erwiesen, diesen mit einem Teil des hydroxylgruppenhaltigen Lösungsmittels vorzumischen und langsam unter Rühren zuzugeben. Prinzipiell kann Paraformaldehyd auch in Pulverform zugegeben werden. Bei sehr reaktiven Polyaminen sowie bei den aliphatischen und cycloaliphatischen Aminen kann es hierbei vorübergehend zur Bildung unlöslicher Gelteile kommen, die jedoch beim Erwärmen auf 100°C - 130°C wieder in Lösung gehen. Der Paraformaldehyd sollte zweckmäßigerweise vor dem Vermischen gleichmäßig fein vermahlen sein, um eine schnellere und gleichmäßige Verteilung in der Aminkomponente zu erreichen, da die Reaktion stark exotherm abläuft.

Von entscheidendem Einfluß auf die Qualität des Härters ist das Verhältnis der Anzahl der primären und/oder sekundären Aminogruppen pro Mol Amin/Mol Formaldehyd. Dieses Verhältnis sollte bei 1 bis 2,5 liegen.

Liegt dieses Verhältnis wesentlich über 2,5, sind noch die Nachteile der bekannten Härter auf Aminbasis zu beobachten. Bei wesentlich höherem Zusatz von Formaldehyd hingegen kommt es zur Gelbildung und unerwünscht hoher Viskosität des Härters. Dieses Verhältnis läßt sich auch ausdrücken als 0,4 bis 1 Mol Formaldehyd pro primärer und/oder sekundärer Aminogruppe.

Die bei der Umsetzung erfolgenden Reaktionen sind bisher noch nicht endgültig aufgeklärt. Es wird jedoch angenommen, daß sich im erheblichen Maße Methylolgruppen ausbilden, die bei weiterer Kondensation in Aminomethylen-Gruppen übergeführt werden. Die nicht mit Formaldehyd umgesetzten freien Aminowasserstoffe sind später in der Lage, mit Epoxidgruppen direkt zu reagieren, so daß die Endprodukte auch beim Erhitzen keinen Formaldehyd abgeben. Sofern die Menge des hydroxylgruppenhaltigen Lösungsmittels nicht zu hoch gewählt wird, wird auch kein Austreten dieser Lösungsmittel beim Erhitzen der Endprodukte beobachtet. Im Gegensatz zu den bereits vorgeschlagenen und verwendeten Mannichbasen beobachtet man bei den erfindungsgemäß verwendeten Härtern überhaupt keine unerwünschten Ausscheidungen. Insbesondere wird bei ihnen kein freies Phenol beobachtet, was zu erheblichen Störungen und Nachteilen führt.

Bei der erfindungsgemäßen Verwendung der Härter zur Herstellung von Epoxidharzen kann die optimale Härtermenge wie folgt berechnet werden:

$$\text{Anzahl der Aminäquivalente 1)} = \frac{\text{Molekulargewicht}}{\text{Anzahl der reaktiven Wasserstoffatome pro Mol Amin}}$$

bzw.

$$\text{Aminäquivalent 2)} = \frac{\text{Gesamteinwaage}}{\text{Anzahl der Aminäquivalente 1) - Anzahl Mol Formaldehyd}}$$

$$\text{1 Mol Formaldehyd} = \text{1 Val} = 30\text{ g}$$

Bei Aminen mit sekundären und primären Aminogruppen im Molekül kann die vorzugsweise einzusetzende Aminmenge ca. 20 - 30 % höher als die nach der Formel Aminäquivalent 2 errechneten Menge liegen. Je nach Anwendungszweck und den gewünschten Eigenschaften kann die Menge des errechneten Aminäquivalents 2 bis zu 50 % über- oder unterschritten werden. Dies kann bei forcierter Trocknung bei Temperaturen bis 180°C von besonderem Vorteil sein.

Wie bereits weiter oben ausgeführt, ist die einzusetzende Menge Formaldehyd abhängig von dem jeweiligen Amin. Bei zu hohen Formaldehydanteilen kann vorübergehend oder endgültig eine Verdickung eintreten. Bei aliphatischen Polyalkylenaminen beobachtet man häufig kurz nach der Zugabe des Paraformaldehyds ein plötzliches Dickwerden. Nach 1 bis 3 Minuten wird das Reaktionsgemisch bei weiterem Rühren jedoch wieder flüssig und homogen. Die so erhaltenen Produkte sind lagerstabil. Bei Erhitzen dieser Produkte auf 100 bis 120°C kann das Reaktionsprodukt offensichtlich unter Wasserabspaltung weiter kondensiert werden, wobei die Viskosität ansteigt. Beim Erhitzen auf 200°C treten nahezu keine Verfärbungen und keine Zersetzungsreaktionen auf. Dies ist auf eine hohe Hitzebeständigkeit dieser Härter zurückzuführen. Die Erhitzung sollte jedoch auf nicht mehr als 200°C erfolgen, da es sonst zu Zersetzungsreaktionen und Verfärbungen kommen kann. Vorzugsweise wird das bei dieser Kondensation gebildete Wasser anschließend im Vakuum entfernt, so daß es nicht mehr zu störenden Nebenreaktionen führen kann. Das gleiche gilt für die Verwendung von wäßrigen Formaldehyd-Lösungen anstelle von Paraformaldehyd. Das zusätzliche Wasser sollte unter Vakuum oder bei höheren Temperaturen entfernt werden. Die so erhaltenen Härter sind jedoch in ihren Eigenschaften durchaus vergleichbar. Derartige weiterkondensierte Härter weisen nochmals etwas verlängerte Verarbeitungszeiten auf, ohne die übrigen Eigenschaften der Endprodukte negativ zu beeinflussen. Insbesondere wird die Neigung solcher Epoxidharz-Härtersysteme unterbunden, durch exotherme Reaktion im Ansatzbehälter Wasser abzuspalten.

Die Reaktion der Amine mit Formaldehyd ist stark exotherm. Es muß daher bei der Reaktion darauf geachtet werden, daß es nicht zu Siedeverzügen und spontanen Verdampfungen kommt. Cycloaliphatische Amin-Formaldehydkondensate sind im allgemeinen reaktionsträger als die nicht umgesetzten Amine. Die Empfindlichkeit gegen Feuchtigkeit und Kohlendioxyd wird jedoch mit steigendem Formaldehydanteil so verringert, daß auch sehr zum Kleben neigende Amine nicht-klebrige und glänzende Beschichtungen liefern. Die Viskosität der Härter ist abhängig von der Anzahl der Aminogruppen pro Molekül und dem Anteil des Formaldehyds. Es ist daher möglich, durch Variation dieses Verhältnisses die Viskosität und die Reaktivität des Trägers zu variieren und dabei trotzdem zu Endprodukten zu kommen, die höchsten Anforderungen genügen. die erfindungsgemäß zu verwendenden Härter werden vorzugsweise die üblichen Epoxidharze, wie Bisphenol A- und Bisphenol F-di-glycidylether, Dibutylenglykol-Diglycidylether und cycloaliphatische Diglycidylester, wie Hexahydrophthalsäurediglycidylester, eingesetzt. Weitere geeignete Epoxidharze sind Hexandiol-, Neopentylglykol-, Polyethylenglykoldiglycidether und Phenoxypolyglycidylether, 3,4-Epoxid-6-methylcyclohexylmethyl-3,4-epoxid-6-methylcyclohexancarboxylat sowie N.N'-Diethoxyanilin sind ebenfalls geeignet. Vorzugsweise werden Epoxidharze mit Molekulargewichten zwischen 350 und 2000 eingesetzt.

Selbstverständlich können den Komponenten Reaktivverdünner, wie Diäthylenglykolmonobutylglycidether, Para-tert.-Butyl-Phenylglycidether, Butylglycidether, Phenylglycidether, o-Kresylglycidether, Butandiol-1,4-diglycidether, 2-Ethylhexylglycidether, aliphatische Monoalkoholglycidether mit 5 bis 22 Kohlenstoffatomen und Versaticsäureglycidester, zugesetzt werden. Schließlich können auch die üblichen Extenderharze, wie nicht-reaktive Epoxidharz-Modifizierungsmittel, Teere, Hellteere, Dibutylphthalat, Pineöl und Cumaronöle zugesetzt werden. Generell können alle üblichen Komponenten und Zusätze bekannter Epoxidharze zum Einsatz kommen, so z. B. auch Pigmente und Füllstoffe.

In den nachfolgenden Beispielen sind einige typische erfindungsgemäß modifizierte Härter für Epoxidharze auf Aminbasis beschrieben sowie ihre Verwendung mit Epoxidharzen.

**Herstellung der Amin-Formaldehyd-Addukte**

**Beispiel 1**

45 Gew.-Teile Ethylendiamin, 45 Gew.-Teile Benzylalkohol und 45 Gew.-Teile Paraformaldehyd werden miteinander vermischt. Die Anzahl der Amingruppen pro Mol Formaldehyd ist 1; das Verhältnis Mol Amin/Mol Formaldehyd 0,5. Daraus ergibt sich, daß 1 Aminäquivalent 90,0 beträgt. Die Viskosität bei 25°C in Pa.s (Platte-Kegel-Viskosimeter der Fa. Epprecht Instruments) betrug 1,1. Die Anzahl der Aminogruppen/Mol Formaldehyd beträgt 1,00. Das Verhältnis Mol Amin/Mol Formaldehyd beträgt 0,5.

**Beispiel 2**

60,5 Gew.-Teile Dipropylentriamin wurden mit 30 Teilen Benzylakohol vermischt. 20,0 Gew.-Teile Paraformaldehyd wurden in 30 Teilen Benzylakohol gelöst und langsam mit der ersten Lösung vermischt. Die Anzahl der Amingruppen/Mol Formaldehyd beträgt 2,01. Das Verhältnis Mol Amin/Mol Formaldehyd ist 0,67. 1 Aminäquivalent beträgt 89,3. Die Viskosität wurde wie in Beispiel 1 gemessen und betrug 1,0. Die Anzahl der Aminogruppen/Mol Formaldehyd beträgt 1,5. Das Verhältnis Mol Amin/Mol Formaldehyd beträgt 0,5.

**Beispiel 3**

120 Teile Trimethylhexamethylendiamin-1,6 wurden in 80 Gew.-Teilen Benzylalkohol gelöst. 20 Gew.-Teile Paraformaldehyd wurden in 80 Gew.-Teilen Benzylalkohol gelöst und langsam mit der ersten Lösung zusammengegeben. Die Anzahl der Amingruppen/Mol Formaldehyd betrug 2,27 und das Verhältnis Mol Amin/Mol Formaldehyd 1,14. 1 Aminäquivalent beträgt 110,0. Die Viskosität bei 25°C in Pa.s ist 1,0. Die Anzahl der Aminogruppen/Mol Formaldehyd beträgt. 4. Das Verhältnis Mol Amin/Mol Formaldehyd beträgt 1,3.

**Beispiel 4**

200 Gew.-Teile Tripropylentetramin werden mit 90 Gew.-Teilen Benzylalkohol vermischt. 60 Teile Paraformaldehyd werden in 90 Teilen Benzylalkohol gelöst und langsam mit der ersten Lösung vereint. Das Reaktionsprodukt hat als Anzahl an Amingruppen/Mol Formaldehyd 2,162 und Mol Amin/Mol Formaldehyd 0,545. 1 Aminäquivalent beträgt 101,0. Die Viskosität bei 25°C in Pa.s beträgt 1,3.

## Beispiel 5

200 Gew.-Teile Tripropylentetramin werden in 90 Teilen Benzylalkohol gelöst. 80 Gew.-Teile Paraformaldehyd werden in 90 Gew.-Teilen Benzylalkohol gelöst und langsam mit der ersten Lösung vereint. Bei diesem Produkt ist die Anzahl der Amingruppen/Mol Formaldehyd 1,62 und Mol Amin/Mol Formaldehyd 0,405. 1 Aminäquivalent beträgt 120,5. Die Viskosität bei 25°C in Pa.s ist 9,2.

## Beispiel 6

120 Gew.-Teile Isophorondiamin werden in 80 Teilen Benzylalkohol gelöst. 20 Gew.-Teile Paraformaldehyd werden in 40 Teilen Benzylalkohol gelöst und langsam mit der ersten Lösung vereint. Bei dem Produkt ist die Anzahl der Amingruppen/Mol Formaldehyd 2,115 und das Verhältnis Mol Amin/Mol Formaldehyd 1,058. 1 Aminäquivalent beträgt 121, und die Viskosität wurde gemessen als 4,1 Pa.s.

## Beispiel 7

169 Gew.-Teile 3,3'-Dimethyl-4,4'-diaminodicyclo-hexylmethan werden in 80 Gew.-Teilen Benzylalkohol gelöst. 20 Gew.-Teile Paraformaldehyd in 40 Teilen Benzylalkohol gelöst werden langsam mit der ersten Lösung vereint. Das entstehende Produkt weist 2,115 Amingruppen pro Mol Formaldehyd auf. Das Verhältnis Mol Amin/Mol Formaldehyd ist 1,058. 1 Aminäquivalent ist 144. Die Viskosität betrug 18,0 Pa.s.

## Beispiel 8

120 Gew.-Teile $\alpha,\alpha'$-Diaminoxylol werden in 80 Teilen Benzylalkohol gelöst. 20 Teile Paraformaldehyd in 40 Teilen Benzylalkohol gelöst werden langsam mit der ersten Lösung vereint. Das Produkt weist 2,640 Amingruppen pro Mol Formaldehyd auf. Das Verhältnis Mol Amin/Mol Formaldehyd beträgt 1,320. 1 Aminäquivalent ist 91,0. Die Viskosität betrug 1,0 Pa.s.

## Beispiel 9

120 g $\alpha,\alpha'$-Diaminoxylol werden in 120 Teilen Benzylalkohol gelöst. 35 Teile Paraformaldehyd werden in 40 Teilen Benzylalkohol gelöst und langsam mit der ersten Lösung vereint. Das erhaltene Produkt weist 1,513 Amingruppen pro Mol Formaldehyd auf. Das Verhältnis Mol Amin/Mol Formaldehyd ist 0,756. 1 Aminäquivalent ist 133. Die Viskosität beträgt 4,2 Pa.s.

## Beispiel 10

135 g Dipropylentriamin werden direkt mit 44,6 g Paraformaldehyd umgesetzt. Das erhaltene Produkt weist 2,01 Amingruppen pro Mol Formaldehyd auf. Das Verhältnis Mol Amin/Mol Formaldehyd ist 0,672. Ein Aminäquivalent ist 48. Die Viskosität in Pa.s beträgt 3.

## Beispiel 11

135 g Dipropylentriamin werden mit 60 g Paraformaldehyd direkt umgesetzt. Das erhaltene Produkt weist 1,5 Amingruppen pro Mol Formaldehyd auf. Das Verhältnis Mol Amin/Mol Formaldehyd ist 0,5. Ein Aminäquivalent ist 65. Die Viskosität beträgt 40 Pa.s.

In den Beispielen 10 und 11 erfolgt die Herstellung in der Form, daß Paraformaldehyd langsam unter Rühren zur Aminkomponente gegeben wird. Die Temperatur steigt exotherm auf etwa 50°C und wird dann durch Kühlen bei Temperaturen zwischen 50 und 80°C gehalten. Nach der Zugabe des gesamten Paraformaldehyds verbleiben einige freie Gelteilchen. Durch Erhitzen auf 95°C und 10 Min. Rühren bei dieser Temperatur wurden die Ansätze homogen und klar.

**Beispiel 12**

120 g α,α'-Diaminoxylol werden in 80 g Benzylalkohol gelöst. 35 g Paraformaldehyd werden in 40 g Benzylalkohol gelöst und langsam mit der ersten Lösung vereint. Das erhaltene Produkt weist 1,512 Amingruppen pro Mol Formaldehyd auf. Das Verhältnis Mol Amin/Mol Formaldehyd ist 0,756. Ein Aminäquivalent ist 116.

**Beispiel 13**

176,5 Gew.-Teile Bisphenol A-Epoxidharz, 75 % gelöst in Xylol (Epoxidäquivalent 450-550), werden mit 191,0 Gew.-Teilen Ethylglykol, 30,5 Gew.-Teilen Dipropylentriamin und 92,0 Gew.-Teilen Solventnaphtha I sowie 10 Gew.-Teilen Paraformaldehyd vermischt. Das Aminäquivalent beträgt 628. Die Viskosität nach 48 Stunden betrug 3,2 Pa.s.

**Beispiel 14**

176,5 Gew.-Teile des Bisphenol A-Epoxidharzes wie in Beispiel 10 wurden mit 191 Gew.-Teilen Ethylglykol und 40 Gew.-Teilen Dipropylentriamin, 82,5 Gew.-Teilen Solventnaphtha I vermischt und mit 10,0 Gew.-Teilen Paraformaldehyd umgesetzt. Das Aminäquivalent betrug 435 g. Die Viskosität nach 48 Stunden betrug 1,2 Pa.s.

**Beispiel 15**

176,5 Gew.-Teile des Bisphenol A-Epoxidharzes wie in Beispiel 10 wurden mit 191 Gew.-Teilen Ethylglykol, 35,4 Gew.-Teilen Tripropylentetramin und 87,1 Gew.-Teilen Solventnaphta I vermischt und mit 10 Gew.-Teilen Paraformaldehyd umgesetzt. Das Aminäquivalent betrug 647 g. Die Viskosität nach 48 Stunden betrug 4,0 Pa.s.

**Beispiel 16**

176,5 Gew.-Teile Bisphenol A-Epoxidharz wie in Beispiel 10 werden mit 191 Gew.-Teilen Ethylglykol, 46,0 g Tripropylentetramin und 76,5 Gew.-Teilen Solventnaphtha I nebst 10 Gew.-Teilen Paraformaldehyd miteinander umgesetzt. Das Aminäquivalent betrug 453 g. Die Viskosität nach 48 Stunden betrug 1,8 Pa.s.

Bei der Herstellung wurde, wie in den Beispielen 10, 11 und 12, das Amin und Monoethylglykol vorgelegt und unter Rühren Paraformaldehyd zugegeben und so lange gerührt, bis das Reaktionsgemisch klar war. Erst dann wurden Solventnaphtha I und Epoxidharzlösung untergerührt. Nach 48 Stunden Lagerung bei Raumtemperatur war die Viskosität konstant.

**Beispiel 17**

324 Gewichsteile Dipropylentriamin wurden direkt mit 40 Gewichsteilen Paraformaldehyd unter Rühren zusammengegeben. Sobald die Lösung wieder klar ist, werden portionsweise weitere 80 Gewichsteile Paraformaldehyd eingerührt. Gegen Ende wird etwas gekühlt, damit die Temperatur nicht über 80° C ansteigt. Sobald die Reaktion des Amins mit dem Formaldehyd zum Abschluß gekommen ist, wird der Ansatz auf 200° C erhitzt, bis keine Wasserabspaltung mehr erkennbar ist. Nach dem Abkühlen erhält man 361,1 Gewichsteile Härter, der bei 25° C eine Viskosität von 9,4 Pa.s aufweist.

**Beispiel 18**

In analoger Weise wie in Beispiel 17 werden 270 Gewichsteile Dipropylentriamin zunächst mit 40 Gewichsteilen und danach mit 80 Gewichsteilen Paraformaldehyd umgesetzt und nach Abklingen der exothermen Reaktion auf 200° C erhitzt, bis keine Wasserabspaltung mehr erkennbar ist. Die Ausbeute an Härter betrug 308,1 Gewichsteile, die Viskosität bei 25° C betrug 100 Pa.s.

### Beispiel 19

270 Gewichtsteile Dipropylentriamin wurden mit 200 Gewichtsteilen Solventnaphtha I vermischt. In diese Lösung wurde unter Rühren portionsweise zunächst 45 Gew.-Teile Paraformaldehyd und nach dem Klarwerden des Ansatzes weitere 90 Gewichtsteile Paraformaldehyd zugegeben. Der Ansatz erwärmt sich gegen Ende bis ca. 96°C und wird etwas gekühlt. Nach Abschluß der exothermen Reaktion wird auf 150°C erhitzt und das gebildete Wasser abgeschieden. Die Ausbeute betrug 594 Gewichtsteile. 108 Gewichtsteile dieses Härters entsprechen einem Epoxid-Äquivalent.

## Verwendung der Amin-Formaldehyd-Addukte als Härter

### Beispiel 20

Die erfindungsgemäße Verwendung der Härter wird in folgendem Beispiel ausführlich beschrieben. Als Stammkomponente für lösungsmittelfreie oder lösungsmittelarme Epoxidharzbeschichtungen wurde folgende Komponente A verwendet:

| | |
|---|---|
| 1200 g | Epoxidharz auf Basis Bisphenol A mit einem Epoxid- äquivalent von 190 g |
| 300 g | Reaktivverdünner (Monoglycidäther eines aliphatischen 12 bis 14 Kohlenstoffatome aufweisenden Alkohols), Epoxidäquivalentgewicht 286 bis 308 g |
| 1000 g | Titandioxid |
| 500 g | Füllstoffe (Spat, Quarzmehl, Silikate, Eisenglimmer) |
| 3000 g | |
| 420 g | dieser Mischung entspricht 1 Epoxidäquivalent |

Bei standfesten Dickbeschichtungen sind zusätzlich Thixotropierungsmittel mitzuverwenden.

Als Füllstoff wurde Quarzmehl verwendet. Die Ergebnisse der verschiedenen Mischungsverhältnisse gemäß den vorausgehenden Herstellungsbeispielen 1 bis 12 sowie Vergleichsversuche mit den Aminen, die nicht mit Formaldehyd umgesetzt wurden, sind in der nachfolgenden Tabelle zusammengestellt. Sämtliche Versuche wurden mit 210 g der Stammkomponente A durchgeführt. Die Mengenangaben für die verwertete Härtermenge gemäß den Beispielen sind ebenfalls in g angegeben.

Außenbewitterungsversuche von Epoxidbeschichtungen, die mittels der neuen Härter hergestellt worden sind, haben ergeben, daß die Vergilbungsempfindlichkeit äußerst gering ist und die Glanzerhaltung im Wetter gegenüber herkömmlichen Härtern deutlich verbessert wird.

| | | | | | | | | |
|---|---|---|---|---|---|---|---|---|
| Härter Beispiel 1 | 45,- | | | | | | | |
| Härter Beispiel 2 | | 45,- | | | | | | |
| Härter Beispiel 3 | | | 55,- | | | | | |
| Härter Beispiel 4 | | | | 50,5 | | | | |
| Härter Beispiel 5 | | | | | 60,2 | | | |
| Härter Beispiel 6 | | | | | | 60,5 | | |
| Härter Beispiel 7 | | | | | | | 72,0 | |
| Härter Beispiel 8 | | | | | | | | 45,5 |
| Entschäumer + Netzmittel (Dow Corning 7) | 2,- | 2,- | 2,- | 2,- | 2,- | 2,- | 2,- | 2,- |
| Topfzeit in Minuten | 50 | 36 | 85 | 32 | 90 | 250 | 360 | 80 |
| Trockengrad 1, in Std. nach DIN 53150: | 11 | 8 | 13,5 | 8 | 8 | 18 | 18 | 5 |
| Buchholzhärte, DIN 53153: | | | | | | | | |
| a) nach 24 Std. Trockenzeit: | 36 | 36 | 40 | 38 | 62 | 17 | 15 | 55 |
| b) nach 5 Tagen ": | 50 | 66 | 40 | ① | ① | 50 | 50 | 66 |
| Trockenschichtdicke in µm: | 400 | 400 | 400 | 400 | 400 | 400 | 400 | 400 |
| Glanzgrad nach DIN 67530: | 33,6 | 83,5 | 54,4 | 57,1 | 64,4 | 65,3 | 84,9 | ① |
| Meßwinkel: | 20° | 20° | 20° | 20° | 20° | 20° | 20° | 20° |

① kein erkennbarer Eindruck

| | | | | | | | | |
|---|---|---|---|---|---|---|---|---|
| Härter Beispiel 9 | 65,5 | | | | | | | |
| Härter Beispiel 10 | | 25,- | | | | | | |
| Härter Beispiel 11 | | | 33,- | | | | | |
| Härter Beispiel 12 | | | | 58,- | | | | |
| Isophorondiamin ⎫ | | | | | 21,3 | | | |
| α α'-Diaminoxylol ⎬ Vergleichsbeispiele ohne Formaldehyd | | | | | | 17,- | | |
| Dipropylentriamin ⎭ | | | | | | | 15,- | |
| Entschäumer + Netzmittel (Dow Corning 7) | 2,- | 2,- | 2,- | 2,- | 2,- | 2,- | 2,- |
| Topfzeit in Minuten | 100 | 50 | 45 | 105 | 300 | 240 | 35 |
| Trockengrad 1 nach DIN 53150, in Stunden: | 12 | 8 | 6 | 12 | 6 | 4 | ④ |
| Trockenschichtdicke in µm 2): | 400 | 400 | 400 | 400 | 400 | 400 | 400 |
| Buchholzhärte DIN 53153, a) nach 24 Std. Trockenzeit: | 33,3 | 36 | 38 | 45 | 33,3 | ③ | 42 |
| b) nach 5 Tagen  ": | 40 | 83 | ⑤ | 66 | ⑤ | ③ | 91 |
| Glanzgrad nach DIN 67530: | 40 | 51 | 41 | 85 | 71 | ③ | 46 |
| Meßwinkel: | 20° | 60° | 20° | 20° | 20° | - | 60° |

③ nicht meßbar, da stark gerunzelt.
④ nicht meßbar, Schmierfilm.
⑤ nicht meßbarer Eindruck
Alle Meßwerte wurden an einem 400 µm Trockenfilm ermittelt, welcher mit einem Aufziehrahmen und einer Spaltbreite von 700 µm auf Glas hergestellt wurde.

**Patentansprüche**

1. Verwendung von Amin-Formaldehydaddukten erhältlich durch Umsetzung von bi- und mehrfunktionellen aliphatischen, cycloaliphatischen oder araliphatischen Aminen oder Gemischen derselben mit 0,4 bis 1 Mol Formaldehyd pro primärer und/oder sekundärer Aminogruppe des Amins, gegebenenfalls in Gegenwart eines hydroxylgruppenhaltigen Lösungsmittels als Härter für Epoxidharze.

2. Verwendung gemäß Anspruch 1 zur Herstellung von Epoxidharzbeschichtungen für Beton, Stahl, dickschichtige Bodenbeschichtungen, Rohrbeschichtungen, laminierte Beschichtungen für chemikalienbelastete Objekte, Klebstoffe, Vergußmassen und Isolierungen von Elektroteilen.

**Claims**

1. Use of amine-formaldehyde adducts obtainable by the reaction of bi- and polyfunctional aliphatic, cycloaliphatic or araliphatic amines or mixtures thereof with from 0.4 to 1 mol of formaldehyde per primary and/or secondary amino group, optionally in the presence of a solvent containing hydroxyl groups, as a curing agent for epoxide resins.

2. Use according to claim 1 for the manufacture of epoxide resin coatings for concrete, steel, thick-layered ground coatings, pipe coatings, laminated coatings for chemical-stressed objects, adhesives, casting and sealing compounds and insulating materials for electric parts.

**Revendications**

1. Utilisation, comme durcisseur de résine époxy, de produits d'addition amine-formaldéhyde, qu'on peut obtenir par réaction d'amines aliphatiques cycloaliphatiques ou araliphatiques bi ou multifonctionnelles, ou de mélanges de ces amines, avec 0,4 à 1 mole de formaldéhyde par groupe amino primaire ou secondaire de l'amine, éventuellement en présence d'un solvant contenant des groupes hydroxyle.

2. Utilisation selon la revendication 1, pour l'obtention de revêtement de résine époxy pour béton, acier, de revêtements de sol en couches épaisses, de revêtement de tubes, de revêtements stratifiés, pour objets soumis à des attaques chimiques, d'adhésifs, de masses à mouler et d'isolants pour composants électriques.